# EUROPEAN PATENT SPECIFICATION

(11) **EP 2 084 782 B1**
(45) Date of publication and mention of the grant of the patent: **06.12.2017**
(21) Application number: 07824215.3
(22) Date of filing: 18.10.2007
(51) Int. Cl.: H01R 4/36, F16B 31/02

(54) **A BOLT FOR USE IN AN ELECTRICAL CONNECTOR**
SCHRAUBE ZUR VERWENDUNG IN EINEM ELEKTRISCHEN VERBINDER
BOULON DESTINE A ETRE UTILISE DANS UN CONNECTEUR ELECTRIQUE

(30) Priority: 21.10.2006 GB 0620946
(43) Date of publication of application: 05.08.2009
(73) Proprietor: Tyco Electronics UK Limited, Swindon, Wiltshire SN3 5HH (GB)
(72) Inventor: BARNETT, Gary, Ashby de Ia Zouch Leicestershire LE65 IJH (GB)
(74) Representative: Beck, Josef
(86) International application number: PCT/GB2007/003965
(87) International publication number: WO 2008/047119

(56) References cited:
- EP-A- 0 688 960
- EP-A- 1 626 187
- GB-A- 2 295 871

## Description

This invention relates to a bolt for use in an electrical connector.

Various forms of electrical connectors are known in which an electrically conducting bolt is screwed into an electrically conducting sleeve or other hollow housing containing a cable. The bolt compresses the metal strands of the cable thereby making an electrically conducting connection with them such that current may flow via the bolt and housing to eg. another cable similarly connected in the connector.

As is well known, the capacity of an electrical connection to conduct current depends on various factors including the pressure exerted between the connector and the cable secured therein; and the resulting surface area of contact.

Conventionally if it is desired to improve the current conducting performance of a connector of the general kind described hereinabove, the design philosophy adopted involves simply lengthening the housing and increasing the number of apertures for the bolts in order to permit the insertion of a greater number of bolts and thereby provide a greater area of contact with the clamped cable.

Designing connectors in this fashion however is associated with a number of disadvantages not the least of which is that the connector housing is thereby made longer than in existing designs. This in turn creates a need for an increased amount of insulative material, to cover the completed connector and render it safe, than would otherwise be the case. Aside from the cost of producing lengthened insulative covers for the connectors, the introduction of lengthened conductors having additional clamping bolts means that the insulation parts are of "non-standard" sizes. This can lead to errors in the preparation of connector kits and confusion, on the part of installers, as to the correct insulation sleeves or other coverings to employ.

Furthermore, it is likely that an installer may need to install a great many connectors during the course of a working day. Any proliferation of the connector bolts can add significantly to the overall time needed to complete a large number of connector installations.

A further problem that has been identified is that of relaxation of the material of the bolts in the connectors described above. Such relaxation has been found to occur very shortly after tightening of the bolts onto the conducting metals of the cables. As a consequence the tip pressure of the bolts reduces with concomitant reductions in current-conducting capacity.

EP 0 688 960 A1 discloses a shear bolt which is constituted by two components, an outer and an inner shear bolt. Hereby inner shear bolt is rotatable in outer shear bolt. Both shear bolts do have different driver portions, eg. recesses, especially hexagonal recesses, for two different tools. After screwing the outer shear bolt into an aperture and shearing its driver portion, by the second tool the inner shear bolt may be screwed further into the aperture until inner shear bolt shears.

It is an aim of the invention to overcome or at least ameliorate one or more of the foregoing problems.

According to the invention in a first aspect there is provided a bolt, for use in an electrical connector, comprising a hollow, cylindrical main body that is open at at least a first end and defines on its exterior an external thread, the main body having defined on an inner surface at or adjacent the first end an internal thread in which is threadedly received a threaded contact bolt and the main body having received in its interior a driver member that is at spaced locations drivingly engaged with the contact bolt and the main body and that is disconnected from the main body between the said locations, the main body including one or more shear formations and an external driver portion whereby on screwing of the external thread at the first end of the main body into an aperture using the driver portion the or a said shear formation may shear such that continued screwing of the main body using the driver portion transfers drive via the driver member to the contact bolt to drive it outwardly from the first open end.

The use of such an arrangement gives rise to considerably higher contact pressure, in a connector employing the bolt, than is available using prior art connector bolts.

This is partly because the feature of transfer of the driving torque for the bolt from the main body to the contact bolt, which latter is driven outwardly from the main body, allows the installer of the bolt to increase the tip pressure applied to the cable immediately after the relaxation effect described above has occurred.

The inventors have found that a bolt according to the invention is, under some circumstances, capable of producing bolt tip (clamping) pressures on cable strands that are almost double the pressures that arise when using conventional connector bolts. As a consequence the bolt of the invention leads to significant savings in the numbers of bolts needed per connector and in turn this permits the use of connector housings of conventional lengths. It follows not only that the bolt of the invention thereby permits the employment of conventional or "standard" insulation members in connector kits; but also leads to significant time savings when an installer has to complete a large number of connectors during a working day.

In practical embodiments of the invention the main body includes a plurality of the shear formations each of which is or includes a groove formed in the material of the main body. In particularly preferred embodiments each groove of a plurality extends part of the way round the exterior of the main body. When a plurality of the grooves is present they preferably are spaced from one another longitudinally at intervals along the length of the main body.

In more detail the main body preferably comprises a series of axially separated weakenings such that the applied torque necessary to cause the main body to shear increases progressively from the weakening furthest from the driver portion to the weakening nearest the driver portion. The weakenings in the main body preferably comprise holes, grooves or slits formed in the side of the main body. The progressive variation in the applied torque necessary to cause shearing can be achieved by control of the dimensions (width, depth) of the holes, grooves or slits constituting the weakenings.

In a preferred embodiment of the invention the main body of the bolt is open at a second end, that is remote from the first end, the driver member being inserted into the hollow interior of the main body via the open, second end.

This arrangement facilitates manufacture of the bolt by permitting insertion of the contact bolt at one end of the main body and insertion of the driver member via the other end of the main body, the driver member being advanced during an assembly process within the hollow interior of the main body until it drivingly engages the contact bolt and the interior of the main body.

Preferably the contact bolt includes an open end that lies within the hollow interior of the main body, a contact bolt-engaging part of the driver member being received in the open end of the contact bolt.

This arrangement facilitates driving engagement between the driver member and the contact bolt.

More specifically the contact bolt-engaging part of the driver member preferably includes formed thereon one or more driver engagement formations and the open end of the contact bolt includes a corresponding number of bolt engagement formations of complementary shape to the driver engagement formations. In one optional embodiment of the invention the driver and bolt formations are or include splines. In an alternative arrangement part of the driver member is an interference fit in the contact bolt.

These features assure a reliable, drive-transferring connection between the driver member and the contact bolt.

Regardless of the precise configuration of the parts permitting drive-transferring engagement between the driver member and the contact bolt, it is preferable that the contact bolt-engaging part of the driver member is a press fit in the open end of the contact bolt.

Such an arrangement assures that the driver member is retained captive within the interior of the main body until after completion of a connector employing the bolt. As a consequence the driver member cannot become lost in transit.

Conveniently the driver member includes a main body-engaging part that is drivingly engaged with the main body inside the hollow interior thereof.

The main body-engaging part in preferred embodiments of the invention includes a plurality of formations that are drivingly engaged with formations of complementary shape that lie on a surface of the interior of the main body.

In particularly preferred embodiments these formations take the form of a polygonal exterior shape of the main body-engaging part of the driver member, the interior of the main body in the vicinity of the main body-engaging part of the driver member being shaped in a complementary fashion thereto.

It is particularly desirable that the driver member includes one or more shear formations. This permits a mode of operation in which, following tightening of the contact bolt onto a cable within a connector housing to a predetermined torque, the driver member shears such that most of the driver member and a portion of the main body may be removed from the connector and discarded. As a consequence the remaining portion of the main body typically protrudes only a short distance outwardly of the connector housing in use, this effect being facilitated by the optional provision of plural shear formations in the main body as aforesaid. The resulting "low profile" of the remnant of the main body means that it is easy to apply an insulative coating, to the resulting connector, in the form of a sleeve or similar member. Furthermore shearing of the driver member means that the exterior driver portion of the main body may also be removed. This renders the connector created by the bolt more permanent than would otherwise be the case, since following removal of the external driver portion it becomes very difficult to unscrew the main body from the connector housing in which it is inserted.

In a preferred embodiment the shear formation of the driver member is or includes a groove formed in the material of the driver member. However, other forms of shear formation (such as notches or zones of relatively soft material) are of course possible within the scope of the invention.

Yet a further, optional feature of the invention is that before use the contact bolt is recessed relative to the first end of the main body. This assures that initial contact between the bolt of the invention and the strands of a cable being clamped in a connector is via the main body. As a result the above-described effect of bolt relaxation occurs as between the main body and cable strands thereby avoiding the risk of relaxation of the contact bolt occurring in such a way as to compromise the conductivity of a connector incorporating the bolt.

There now follows a description of preferred embodiments of the invention, by way of non-limiting example, with reference being made to the accompanying drawings in which:
Figure 1 is a perspective view of the components of a bolt, according to the invention, in a pre-assembly state; and
Figure 2 is a cross-sectional view of the bolt of Figure 1, following assembly.

Referring to the drawings, the bolt 10 for use in an electrical connector generally of the kind described hereinabove comprises a generally cylindrical, hollow main body 11 made of an electrically conducting material such as brass, aluminium or steel. Main body 11 may readily be manufactured by machining techniques that are well known in the art.

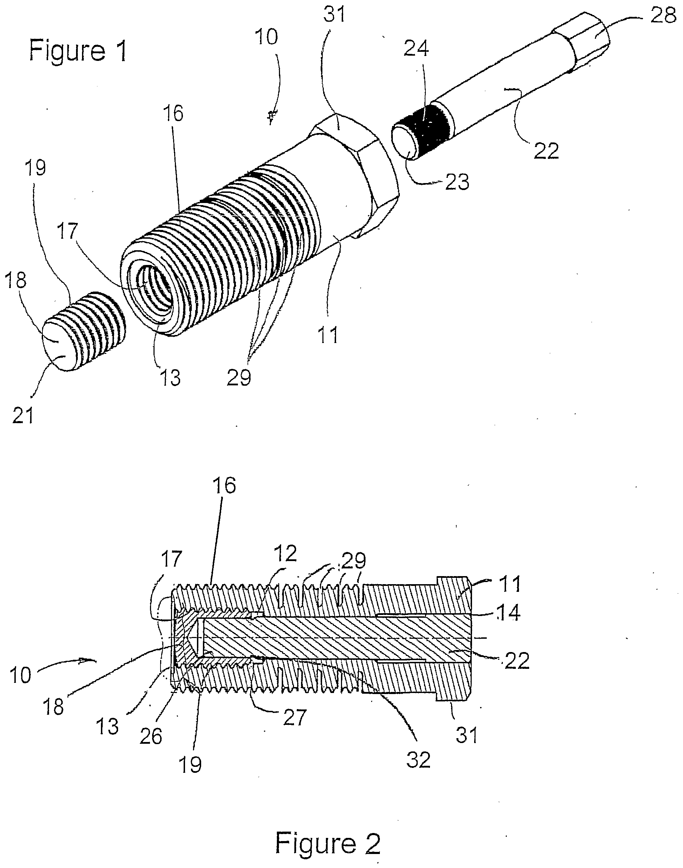

Main body 11 is formed with a hollow interior 12 that is cylindrical in shape and, as illustrated in Figure 2, of varying diameter depending on the precise location along the length of main body 11.

Main body 11 is open at a first end 13 and at a second end 14 as is evident from Figure 2.

Over a major part of its length extending from first end 13 towards second end 14 the exterior surface of main body 11 is formed as a substantially continuous external thread 16 by means of which main body 11 may be screwed into an aperture in the housing of an electrical connector.

In the hollow interior extending a distance away from first end 13 main body 11 is formed with an internal thread 17 having threadedly received therein a contact bolt 18 in the form of a cylindrical member of essentially constant diameter having formed on its exterior surface along the length thereof a contact bolt thread 19.

Contact bolt 18 is on assembly of the bolt 10 screwed into first end 13 until the in-use free end 21 of contact bolt 18 is recessed relative to first end 13 of main body 11, as is evident from Figure 2. The length of internal thread 17 is sufficient to accommodate screwing in of contact bolt 18 to this extent.

A driver member 22 is received within the hollow interior of main body 11 again as shown in Figure 2. In the embodiment shown driver member 22 is on assembly of bolt 11 inserted via second, open end 14 of main body 11 such that its in use forwardmost end 23 engages contact bolt 18 the latter having been inserted, during the assembly process, before insertion of the driver member 22 occurs.

Over a short contact bolt-engaging region 24 extending away from the forwardmost end 23 driver member 22 is formed in such a way as to be drivingly engageable with contact bolt 18. In the embodiment shown this is achieved by virtue of contact bolt 18 having a hollow, cylindrical interior 26 that is open at the end 27 of contact bolt 18 that lies remote from free end 21. The region 24 of driver member 22 is of a diameter that is an interference fit in hollow interior 26, whereby on assembly of the bolt 10 the driver member may be forced using a hammer or a press tool so that the portion 24 thereof becomes frictionally engaged in the hollow interior 26.

This arrangement is shown in Figure 2. Other possibilities for securing driver member 22 and contact bolt 18 together include the use of respective series of splines formed on the end of driver member 22 and in the hollow interior 26 of contact bolt 18. Regardless of the precise arrangement adopted, however, it is important that the connection between the forwardmost end of driver member 22 and contact bolt 18 is capable of transmitting rotational drive from the driver member to the contact bolt 18.

At its end 28 remote from forwardmost end 23 driver member 28 is as shown in Figure 1 formed with a polygonal, especially hexagonal, cross-section driver portion 28 on its exterior surface.

The dimensions of hexagonal driver portion 28 are such that its effective "diameter" is greater than that of the remainder of driver member 22 such that the length of driver member 22 may pass along the hollow interior of main body 11 to engage the contact bolt 18 on assembly of the bolt 10.

Open, second end 14 of main body 11 is formed on its internal surfaces with a complementary cross-section to that of portion 28. As a result on pressing, hammering or other forcing of driver member 22 into hollow interior 12 the driver portion 28 thereof becomes drivingly engaged with main body 11 in the vicinity of second end 14.

In the region between portions 24 and 28 driver member 22 is sufficiently disconnected from the material of main body 11 as to be rotatable relative thereto. This is achieved by virtue of the relative diameters of hollow, cylindrical interior 12 and driver member 22 in this intermediate region.

Contact bolt 18 may be manufactured eg. by machining from a conducting metal such as brass, aluminium or steel. Driver member 22 may be machined from a rigid metal that also preferably is electrically conducting.

On its exterior adjacent second end 14 main body 11 is formed with an external driver portion 31 that in the embodiment shown in the drawings is formed as a series of flats that are engageable by a spanner. Other forms of driver portion are of course known in the art and will occur to those of skill.

The exterior of main body 11 includes formed therein a plurality of shear formations that in the embodiment shown are a series of annular grooves 29 cut into the exterior thread 16 at spaced intervals therealong, approximately in a centre region of main body 11.

The main body 11 preferably comprises a series of axially separated weakenings 29 such that the applied torque necessary to cause the main body 11 to shear increases progressively from the weakening 29 furthest from the driver portion 31 to the weakening 29 nearest the driver portion 31. The weakenings 29 in the main body 11 preferably comprise holes, grooves or slits formed in the side of the main body. The progressive variation in the applied torque necessary to cause shearing can be achieved by control of the dimensions (width, depth) of the holes, grooves or slits constituting the weakenings.

The driver member 22 additionally includes, extending around its periphery adjacent portion 24, a further shear groove 32 that also is of a *per se* known kind. This groove 32 causes shearing of driver member 22 when the torque applied thereto exceeds a threshold value. The width, depth and/or radius of groove 32 may be chosen in order to determine the threshold torque.

The bolt 10 is supplied in the form shown in Figure 2, ie. with the contact bolt 18 screwed into the internal thread 17 such that free end 21 thereof is recessed relative to the end of main body 11; and with driver member 22 inserted fully into the hollow interior of main body 11 such that portion 24 is drivingly engaged in the interior of contact bolt 18 and end 28 is drivingly engaged with main body 11 adjacent second end 14.

Such recessing of the contact bolt 18 relative to first end 13 of main body 11 is important because it is necessary for the main body 11 initially to contact the cable in the connector housing and then undergo its known relaxation phenomenon, before the contact bolt 18 is deployed to compensate for and then exceed the loss in compression represented by the relaxation step.

Use of the bolt 10 involves a user in screwing the main body 11 initially into an aperture formed in a connector housing, this being achieved by means of the external thread 16 engaging a thread in such an aperture. The user would apply a spanner to the driver portion 31 for this purpose. Such action would cause the main body 11 in the vicinity of first end 13 to engage and compress the wire strands of a cable received within the interior of the connector housing.

Continued rotation of main body 11 using driver portion 31 increases the torque applied to main body 11 until one of the shear grooves 29 causes shearing of the material of main body 11. Typically the shear groove 29 closest to the housing of the electrical connector would shear in this fashion.

At this point the known phenomenon of relaxation of the thread 16, causing a reduction in the clamping pressure applied to the cable, would typically occur.

The user would then continue to rotate the bolt 10, using the driver portion 31, in the same direction as previously.

By virtue of engagement of second end 14 of main body 11 with portion 28 of driver member 22 such rotation is transferred as a result of the rigidity of driver member 22 to the contact bolt 18.

Such transfer of drive causes contact bolt 18 to be screwed outwardly from the first end 13 of the main body 11 so as to engage and further compress the cable in the connector housing. This causes re-establishment of the previously applied clamping pressure, which with continued rotation using the driver portion 31 is exceeded such that the contact bolt 18 exerts a greater pressure on the cable than would be possible merely through screwing in of the main body 11 on its own.

Eventually the torque applied to driver member 22 is sufficient to exceed the shear threshold of shear groove 32. At this point driver member 22 shears such that major parts of the driver member 22 and main body 11 may be separated entirely from those portions remaining received in the aperture of the connector housing.

The thus-separated metal parts may be discarded leaving only a comparatively short length of main body 11 having protruding forwardly therefrom the contact bolt 18 received within the connector housing aperture. This arrangement has a "low profile" that is easy to cover with an insulating sleeve. Unscrewing of the resulting remnant of the main body from the aperture is difficult to achieve since there remains no feature by which it readily may be gripped or otherwise engaged.

Overall the bolt 10 of the invention provides a simple, compact, easy-to-use device that is capable of achieving considerably higher clamping pressures in electrical connectors than has hitherto been possible. The advantages of the invention therefore readily arise in the ways described hereinabove.

## Claims

1. Bolt (10), for use in an electrical connector, comprising a hollow, cylindrical main body (11) that is open at at least a first end (13) and defines on its exterior an external thread (16),
the main body (11) having defined on an inner surface at or adjacent the first end (13) an internal thread (17) in which is threadedly received a threaded contact bolt (18), and the main body (11) having received in its interior (12) a driver member (22) that is at spaced locations drivingly engaged with the contact bolt (18) and the main body (11) and that is disconnected from the main body (11) between the said locations,
the main body (11) including one or more shear formations (29) and an external driver portion (31), whereby on screwing of the external thread (16) at the first end (13) of the main body (11) into an aperture using the driver portion (31) the or a said shear formation (29) may shear such that continued screwing of the main body (11) using the driver portion (31) transfers drive via the driver member (22) to the contact bolt (18) to drive it outwardly from the first open end (13).

2. Bolt (10) according to claim 1 wherein the main body (11) includes a plurality of the shear formations.

3. Bolt (10) according to claim 2 wherein the or each said shear formation is or includes a groove (29) formed in the material of the main body (11).

4. Bolt (10) according to any preceding claim the main body (11) of which is open at a second end (14), that is remote from the first end (13), the driver member (22) being inserted into the hollow interior (12) of the main body (13) via the open, second end (14).

5. Bolt (10) according to any preceding claim wherein the contact bolt (18) includes an open end that lies within the hollow interior (12) of the main body (11), a contact bolt-engaging part (24) of the driver member (22) being received in the open end (27) of the contact bolt (18).

6. Bolt (10) according to claim 5 wherein the contact bolt-engaging part (24) of the driver member (22) includes formed thereon one or more driver engagement formations, and the open end (27) of the contact bolt (18) includes a corresponding number of bolt engagement formations of complementary shape to the driver engagement formations.

7. Bolt (10) according to claim 6 wherein the driver and bolt formations are or include splines.

8. Bolt (10) according to claim 6 wherein the driver member (22) is an interference fit in the contact bolt (18).

9. Bolt (10) according to any of claims 5 to 8 wherein the contact bolt-engaging part (24) of the driver member (22) is a press fit in the open end (27) of the contact bolt (18).

10. Bolt (10) according to any preceding claim wherein the driver member (22) includes a main body-engaging part that is drivingly engaged with the main body (11) inside the hollow interior (12) thereof.

11. Bolt (10) according to claim 10 wherein the main body-engaging part includes a plurality of formations that are drivingly engaged with formations of complementary shape that lie on a surface of the interior (12) of the main body (11).

12. Bolt (10) according to claim 11 wherein the formations of the main body-engaging part are defined as a polygonal exterior shape of the said part.

13. Bolt (10) according to any preceding claim wherein the driver member (22) includes one or more shear formations (32).

14. Bolt (10) according to claim 13 wherein the or each shear formation (32) of the driver member (22) is or includes a groove formed in the material of the driver member (22).

15. Bolt (10) according to any preceding claim, wherein the contact bolt (18) is recessed relative to the first end (13) of the main body (11).

## Patentansprüche

1. Schraube (10) zur Verwendung bei einem elektrischen Verbinder, die einen hohlen zylinderförmigen Hauptkörper (11) umfasst, der an mindestens einem ersten Ende (13) offen ist und an seiner Außenseite ein Außengewinde (16) definiert,
wobei auf einer Innenfläche des Hauptkörpers (11) bei oder in der Nähe von dem ersten Ende (13) ein Innengewinde (17) definiert ist, in dem eine mit einem Gewinde versehene Kontaktschraube (18) eingeschraubt ist, und im Inneren (12) des Hauptkörpers (11) ein Antriebsglied (22) aufgenommen ist, das an beabstandeten Stellen mit der Kontaktschraube (18) und dem Hauptkörper (11) in Antriebseingriff steht und das zwischen diesen Stellen von dem Hauptkörper (11) getrennt ist,
wobei der Hauptkörper (11) eine oder mehrere Scherformationen (29) und einen äußeren Antriebsabschnitt (31) umfasst, wobei beim Schrauben des Außengewindes (16) an dem ersten Ende (13) des Hauptkörpers (11) in eine Öffnung unter Verwendung des Antriebsabschnitts (31) die oder eine Scherformation (29) scheren kann, so dass durch fortlaufendes Schrauben des Hauptkörpers (11) unter Verwendung des Antriebsabschnitts (31) dahingehend Antrieb über das Antriebsglied (22) auf die Kontaktschraube (18) übertragen wird, sie aus dem ersten offenen Ende (13) nach außen zu treiben.

2. Schraube (10) nach Anspruch 1, wobei der Hauptkörper (11) mehrere Scherformationen umfasst.

3. Schraube (10) nach Anspruch 2, wobei die oder jede Scherformation eine Nut (29), die in dem Material des Hauptkörpers (11) ausgebildet ist, ist oder umfasst.

4. Schraube (10) nach einem vorhergehenden Anspruch, deren Hauptkörper (11) an einem zweiten Ende (14), das von dem ersten Ende (13) entfernt ist, offen ist, wobei das Antriebsglied (22) über das offene zweite Ende (14) in das hohle Innere (12) des Hauptkörpers (13) eingeführt wird.

5. Schraube (10) nach einem vorhergehenden Anspruch, wobei die Kontaktschraube (18) ein offenes Ende umfasst, das in dem hohlen Inneren (12) des Hauptkörpers (11) liegt, wobei ein Kontaktschraubeneingriffsteil (24) des Antriebsglieds (22) in dem offenen Ende (27) der Kontaktschraube (18) aufgenommen wird.

6. Schraube (10) nach Anspruch 5, wobei der Kontaktschraubeneingriffsteil (24) des Antriebsglieds (22) eine oder mehrere daran ausgebildete Antriebseingriffsformationen umfasst und das offene Ende (27) der Kontaktschraube (18) eine entsprechende Anzahl an Schraubeneingriffsformationen mit zu den Antriebseingriffsformationen komplementärer Form umfasst.

7. Schraube (10) nach Anspruch 6, wobei die Antriebs- und Schraubenformationen Keilverzahnungen sind oder umfassen.

8. Schraube (10) nach Anspruch 6, wobei das Antriebsglied (22) eine Übermaßpassung in der Kontaktschraube (18) ist.

9. Schraube (10) nach einem der Ansprüche 5-8, wobei der Kontaktschraubeneingriffsteil (24) des Antriebsglieds (22) eine Presspassung in dem offenen Ende (27) der Kontaktschraube (18) ist.

10. Schraube (10) nach einem vorhergehenden Anspruch, wobei das Antriebsglied (22) einen Hauptkörpereingriffsteil umfasst, der mit dem Hauptkörper (11) in dem hohlen Inneren (12) davon in Antriebseingriff steht.

11. Schraube (10) nach Anspruch 10, wobei der Hauptkörpereingriffsteil mehrere Formationen umfasst, die mit Formationen mit komplementärer Form, die sich auf einer Fläche des Inneren (12) des Hauptkörpers (11) befinden, in Antriebseingriff stehen.

12. Schraube (10) nach Anspruch 11, wobei die Formationen des Hauptkörpereingriffsteils als eine polygonale äußere Form des Teils definiert werden.

13. Schraube (10) nach einem vorhergehenden Anspruch, wobei das Antriebsglied (22) eine oder mehrere Scherformationen (32) umfasst.

14. Schraube (10) nach Anspruch 13, wobei die oder jede Scherformation (32) des Antriebsglieds (22) eine Nut, die in dem Material des Antriebsglieds (22) ausgebildet ist, ist oder umfasst.

15. Schraube (10) nach einem vorhergehenden Anspruch, wobei die Kontaktschraube (18) bezüglich des ersten Endes (13) des Hauptkörpers (11) eingelassen ist.

## Revendications

1. Boulon (10), destiné à une utilisation dans un connecteur électrique, comprenant un corps principal (11) cylindrique creux qui est ouvert au niveau d'au moins une première extrémité (13) et définit, sur sa partie extérieure, un filetage extérieur (16),
le corps principal (11) comportant un filetage intérieur (17) défini sur une surface intérieure au niveau ou à proximité de la première extrémité (13), dans lequel est reçu par vissage un boulon de contact (18) fileté, et le corps principal (11) recevant dans sa partie intérieure (12) un élément d'entraînement (22) qui est, au niveau d'emplacements espacés, mis en prise par entraînement avec le boulon de contact (18) et le corps principal (11) et qui est détaché du corps principal (11) entre lesdits emplacements,
le corps principal (11) comprenant une ou plusieurs formations de cisaillement (29) et une partie extérieure d'entraînement (31), la ou l'une desdites formations de cisaillement (29) pouvant ainsi, lors du vissage du filetage extérieur (16) au niveau de la première extrémité (13) du corps principal (11) dans une ouverture à l'aide de la partie d'entraînement (31), se rompre par cisaillement de telle sorte que la poursuite du vissage du corps principal (11) à l'aide de la partie d'entraînement (31) transfère l'entraînement, par le biais de l'élément d'entraînement (22), au boulon de contact (18) afin de l'entraîner vers l'extérieur à partir de la première extrémité ouverte (13).

2. Boulon (10) selon la revendication 1, dans lequel le corps principal (11) comprend une pluralité des formations de cisaillement.

3. Boulon (10) selon la revendication 2, dans lequel la ou chacune desdites formations de cisaillement est ou comprend une rainure (29) formée dans le matériau du corps principal (11).

4. Boulon (10) selon l'une quelconque des revendications précédentes, dont le corps principal (11) est ouvert au niveau d'une seconde extrémité (14), qui est distante de la première extrémité (13), l'élément d'entraînement (22) étant inséré dans la partie intérieure creuse (12) du corps principal (13) par la seconde extrémité (14) ouverte.

5. Boulon (10) selon l'une quelconque des revendications précédentes, dans lequel le boulon de contact (18) comprend une extrémité ouverte qui se trouve à l'intérieur de la partie intérieure creuse (12) du corps principal (11), une partie de mise en prise avec le boulon de contact (24) de l'élément d'entraînement (22) étant reçue dans l'extrémité ouverte (27) du boulon de contact (18) .

6. Boulon (10) selon la revendication 5, dans lequel une ou plusieurs formations de mise en prise d'élément d'entraînement sont formées sur la partie de mise en prise avec le boulon de contact (24) de l'élément d'entraînement (22), et l'extrémité ouverte (27) du boulon de contact (18) comprend un nombre correspondant de formations de mise en prise de boulon de forme complémentaire par rapport aux formations de mise en prise d'élément d'entraînement.

7. Boulon (10) selon la revendication 6, dans lequel les formations d'élément d'entraînement et de boulon sont ou comprennent des cannelures.

8. Boulon (10) selon la revendication 6, dans lequel l'élément d'entraînement (22) est ajusté avec serrage dans le boulon de contact (18).

9. Boulon (10) selon l'une quelconque des revendications 5 à 8, dans lequel la partie de mise en prise avec le boulon de contact (24) de l'élément d'entraînement (22) est ajustée avec serrage dans l'extrémité ouverte (27) du boulon de contact (18).

10. Boulon (10) selon l'une quelconque des revendications précédentes, dans lequel l'élément d'entraînement (22) comprend une partie de mise en prise avec le corps principal qui est mise en prise par entraînement avec le corps principal (11) à l'intérieur de la partie intérieure creuse (12) de celui-ci.

11. Boulon (10) selon la revendication 10, dans lequel la partie de mise en prise avec le corps principal comprend une pluralité de formations qui sont mises en prise par entraînement avec des formations de forme complémentaire se trouvant sur une surface de la partie intérieure (12) du corps principal (11).

12. Boulon (10) selon la revendication 11, dans lequel les formations de la partie de mise en prise avec le corps principal sont définies comme une forme extérieure polygonale de ladite partie.

13. Boulon (10) selon l'une quelconque des revendications précédentes, dans lequel l'élément d'entraînement (22) comprend une ou plusieurs formations de cisaillement (32).

14. Boulon (10) selon la revendication 13, dans lequel la ou chaque formation de cisaillement (32) de l'élément d'entraînement (22) est ou comprend une rainure formée dans le matériau de l'élément d'entraînement (22).

15. Boulon (10) selon l'une quelconque des revendications précédentes, dans lequel le boulon de contact (18) est en retrait par rapport à la première extrémité (13) du corps principal (11).
